# EUROPEAN PATENT SPECIFICATION

(11) **EP 0 839 291 B1**
(45) Date of publication and mention of the grant of the patent: **02.06.1999**
(21) Application number: 96922133.2
(22) Date of filing: 02.07.1996
(51) Int. Cl.: F16C 32/04

(54) **ELECTROMAGNETIC BEARING**
ELEKTROMAGNETISCHES LAGER
PALIER ELECTROMAGNETIQUE

(30) Priority: 14.07.1995 GB 9514420
(43) Date of publication of application: 06.05.1998
(73) Proprietor: Federal-Mogul Engineering Limited, Manchester, M22 5TN (GB)
(72) Inventor: JAYAWANT, Richard, Anthony, Chandar, Lewes East Sussex BN7 1JZ (GB)
(74) Representative: Hammersley, John
(86) International application number: GB9601581
(87) International publication number: WO9704243

(56) References cited:
- EP-A- 0 311 122
- EP-A- 0 364 993
- SU-A- 1 838 682
- US-A- 4 866 318
- US-A- 5 179 308
- US-A- 5 216 308
- PATENT ABSTRACTS OF JAPAN vol. 011, no. 247 (M-615), 12 August 1987 & JP,A,62 056618 (MARUWA DENKI KK;OTHERS: 01), 12 March 1987,
- PATENT ABSTRACTS OF JAPAN vol. 94, no. 010 & JP,A,06 280873 (EBARA CORP), 7 October 1994,

## Description

This invention relates to electromagnetic bearings and particularly to bearings for suspending a rotating shaft or body which in operation rotates about a longitudinal axis thereof.

Electromagnetic bearings may comprise radial bearings, for positioning the shaft in respect of directions perpendicular to the longitudinal axis, or axial bearings, for positioning the shaft in respect of directions along said longitudinal axis.

Such radial bearings and axial bearings have many differences in structure but many similarities in respect of the provision of suspension forces electromagnetically and the control of such forces. For simplicity it is appropriate to refer to one type only in detail and then to make comparison with, and describe features unique to, the other type.

It is well known for such a radial bearing to support a shaft at one or more regions along its length, at each suspension region the bearing comprising a rotor, often a specially prepared part of the shaft, surrounded by a stator from which it is spaced radially by a small suspension gap when magnetic forces generated by electromagnet coils of the stator act on the rotor. In order to maintain the rotor suspended at a desired position centrally within the stator the magnetic forces may require to be varied in different radial directions in response to external forces acting on the rotor.

Control means, including displacement or like motion sensing means associated with one or more radial directions, varies the force in the appropriate radial direction by varying the current supplied thereto.

However, it will be appreciated that in order to track rapidly occurring changes in disturbance forces, that is, to have a usefully high response bandwidth, it is necessary to change the flux density rapidly. It is conventional to operate with a high initial, or bias, flux, upon which changes are superimposed to effect said changes in force, so that a power supply for the electromagnet coil requires to be able to supply significant bias current at all times and effect rapid variation thereof when required. Given the significant inductance of the ferromagnetic cored electromagnet coil, such ab.ility for rapid current change means also that the supply is a high voltage supply.

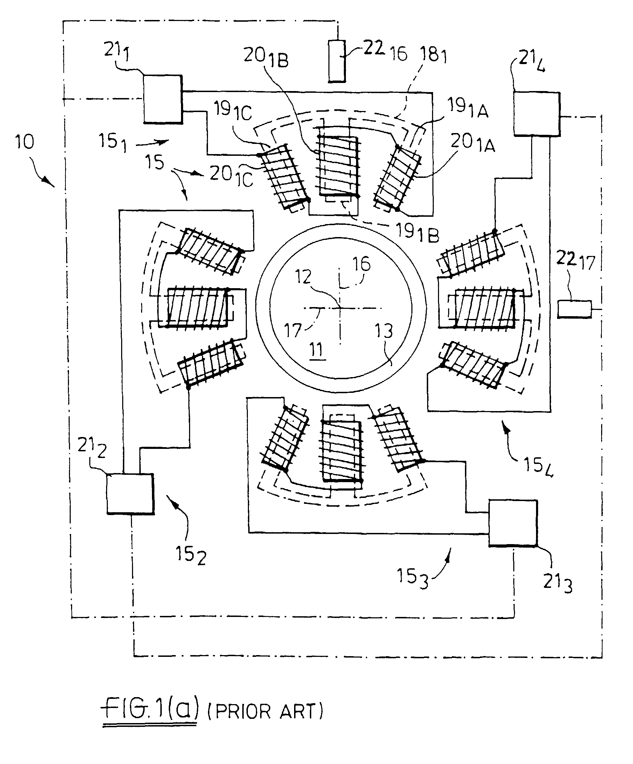

Such a known electromagnetic bearing arrangement of radial form is illustrated schematically at 10 in Figure 1(a), which shows a cross section through a shaft 11 rotatable about a longitudinal axis 12. The periphery of the shaft carries a stack of annular laminations 13 defining a rotor of the bearing and is surrounded by a stator indicated generally at 15.

The stator 15 comprises a plurality of stator pole arrangements, 15₁-15₄. Each pole arrangement is associated with an axis extending radially from the longitudinal rotation axis of the rotor; in the example the pole arrangements are disposed about the axis in diametrically opposite pairs, pole arrangements 15₁ and 15₃ being associated with radial axis 16 and pole arrangements 15₂ and 15₄ being associated with radial axis 17.

The pole arrangements are substantially identical; the pole arrangement 15₁ for example comprising a laminated core 18₁ having three limbs 19_{1A}, 19_{1B} and 19_{1C} extending towards the rotor and separated from each other in a circumferential direction.

Each limb supports an electromagnetic coil 20_{1A}, 20_{1B}, 20_{1C} respectively wound around the limb, the coils being connected in series and supplied with direct current from supply amplifier 21₁. The coils are connected to each other such that the current flows through adjacent coils in opposite directions, in effect creating North and South magnetic poles alternately for the circumferential extent of the pole arrangement. These poles form with the laminated surface of the rotor, magnetic flux paths that attract the rotor towards the pole arrangement, and although only limb 19₂ is centred on the radial axis, the limbs for practical purposes effect a force along the radial axis 16. As indicated above, the other pole arrangements are identical, the arrangements 15₂-15₄ being supplied by individual amplifiers 21₂-21₄ respectively.

Each of the radial axes 16, 17 has associated therewith a displacement or like motion sensor 22₁₆, 22₁₇ respectively, which detects movement of the rotation axis 12 from a desired central position within the stator and causes the currents supplied to the associated pole arrangements to be varied in such a sense as to counter the movements. The radial axes which have such pole arrangements and displacement sensors associated therewith may thus also be called displacement axes.

Conveniently, for maximal change in suspension force for minimum change in current in each pole arrangement, the sensor means causes an increase in current in one pole arrangement and a corresponding decrease in the diametrically opposite one. The current supply sources may include amplifiers and controllers which have transfer functions including proportional, integral and derivative terms as is well known in the art, or may be connected to the sensor means by way of controllers, such as programmable computers, to which a transfer function can be set or varied at will and produce control signals for directly driving the supply sources.

It will be seen that a separate supply amplifier is required for each pole arrangement and, as outlined above, the amplifier must be a high power, high voltage amplifier in order to supply both a substantial bias current and superimposed thereon the high frequency variations that effect the dynamic suspension control of the bearing.

In the art, the term 'high voltage' is used in respect of that readily obtained from the local mains supply, and typically a direct current at a voltage of the order of 300 volts is obtained and used, although it will be appreciated that supplies having similar voltage levels may be derived by other means.

Each supply amplifier is complex and generates significant heat in operation, compromising its reliability unless provided with supporting temperature conditioning means, whilst the need for one such supply amplifier for each coil arrangement further compromises the overall statistical reliability, or mean time between failures, of the bearing arrangement. The overall provision of satisfactory temperature conditioning hardware, in the form of heat sinks, cooling fans, supporting structures etc, which results from such considerations, is a significant part of the complexity and cost of the overall arrangement.

A known arrangement for an axial, or thrust, bearing is illustrated schematically at 23 in Figure 1(b), which shows in elevational cross-section, the shaft 11 (rotatable about longitudinal axis 12) to which is affixed a radially extending collar 24 for rotation therewith and comprising the rotor of the bearing. The collar is formed of ferromagnetic material and is of substantially uniform thickness, having radially extending surfaces 24₁ and 24₂ which face in opposite axial directions.

A stator 25 surrounds the shaft 11 and comprises annular pole arrangement 26₁ axially spaced from collar surface 24₁, and annular pole arrangement 26₂, axially spaced from collar surface 24₂. The pole arrangement 26₁ comprises a ferromagnetic core 26_{1C} having an annular recess 26_{1R} facing the collar surface and containing an electromagnet coil 27₁, wound coaxially with the shaft axis 12, the annular regions of the core radially inwardly and outwardly thereof comprising annular 'limbs' 26₁ᵢ 26₁ₒ which extend towards the collar surface.

The coil 27₁ is supplied with direct current from supply amplifier 28₁ and creates a magnetic flux in the core and collar to attract the collar towards the pole arrangement. A displacement, or motion, sensor 29₁, similar to 22₁₆, determines the axial position of the collar or its motion in an axial direction and controls the current supplied by source 28₁. The annular pole arrangement 26₂ is identical, having circular coil 27₂ and current supply amplifier 28₂, controlled by an associated sensor 29₂, or possibly sensor 29₁ common to both amplifiers.

Each supply amplifier responds independently to axial displacement resulting from an external force acting on the shaft and varies the current in the appropriate coil to vary the attractive force acting on the collar to counter such displacement. Various structures for such pole arrangements exist other than the illustrated two-limbed core structure which is c-shaped in cross-section. Frequently, such axial bearing pole arrangements have a three-limbed core or E-section, incorporating two electromagnetic coils in the radially spaced annular recesses, or a c-section core as illustrated but with a second, keeper, coil extending about the radially outer limbs.

Notwithstanding the precise structure of such pole arrangements, they are similar to the radial bearing pole arrangements described above in that the current supply sources require to be high voltage, high current sources in order both to provide a high level of magnetic flux (which can be made to change rapidly with a change in current) and respond to the sensor with a rapid current change within the inductive pole arrangement.

Thus, although such radial and axial bearing arrangements differ structurally, the above-outlined operating constraints imposed by the need for high voltage power supplied to the electromagnetic coils are common to both. It is known from laid-open Patent Application JP 62-56618 to provide a tool having axial and radial electromagnetic bearings, each radial electromagnetic bearing comprising a rotor, rotatable about a rotational axis, and stator means comprising a plurality of stator pole arrangements having limbs of ferromagnetic material directed towards differently facing surfaces of the rotor to form therewith a magnetic flux path through the rotor, electromagnet coil means associated with said limbs, electrical supply means operable to provide current to the coil means to effect a bias flux within the stator arrangement and attracting the rotor to the pole arrangements, control means, including sensor means responsive to displacement of the rotor from a desired position with respect to the stator, operable to vary the current supply to the electromagnetic coil means to vary the flux and restore the rotor to said desired position, the stator comprising an even number of such pole arrangements disposed in pairs, each pair being oppositely directed along a displacement axis, the electromagnet coil means comprising, for each stator pole arrangement, separate bias coils, operable to provide a said bias flux, and control coils, operable to dynamically vary the total flux, and thus suspension force applied by the pole arrangement, the bias coils for all of the stator comprising an even number of such pole arrangements disposed in pairs, each pair being oppositely directed along a displacement axis, the electromagnet coil means comprising, for each stator pole arrangement, separate bias coils, operable to provide a said bias flux, and control coils, operable to dynamically vary the total flux, and thus suspension force applied by the pole arrangement, the bias coils for all of the pole arrangements being connected in series, such that the coils of each pair of oppositely disposed pole arrangements are coupled to provide fluxes within the pole arrangements that effect forces on the rotor along the displacement axis in opposite directions and the control coils of each pair of said oppositely disposed pole arrangements being connected in series, to provide, for a particular current direction, fluxes within said pole arrangements that aid and oppose the bias coil fluxes in the respective pole arrangement, and the electrical supply means comprising a bias current source arranged to supply a substantially constant bias current to the serially connected bias coils, and, for each said pair of oppositely disposed pole arrangements associated with a displacement axis, a common control current source responsive to an indication from said sensor means of displacement of the rotor along said displacement axis to supply control current to the control coils of the pair in such a sense as to vary the forces along said axis generated by the bias coils to oppose said displacement.

However, if the above mentioned approaches to generating such currents are followed, the current supply components are still likely to end up as expensive, specially designed components which are not necessarily running at optimum efficiency.

The present invention is directed to providing an electromagnetic bearing according to the above mentioned laid-open Patent Application which is characterised in that each control current source comprises a switched-mode, bi-directional current, servo-motor power amplifier arranged to supply control current to the associated control coils at relatively high voltage derivable from local mains supply and the bias current source is arranged to supply said bias current to the bias coils at a voltage low in comparison to that of the control current.

If space is at a premium within a bearing arrangement, then compared with an existing arrangement as outlined above, the separate bias and control coils may be provided by dividing such existing coils into two coils having the same total number of turns. Subject to there being a constant force along a displacement axis to be countered by unequal forces generated in the bias coil, for example gravity, the bias and control coils of any pole arrangement may have approximately the same number of turns. The ability to drive the bias coils from a low voltage dedicated source means that the bias current can readily be doubled to compensate; likewise, the fact that the high voltage control coils are driven only at low control current in normal operating circumstances, means that the control current may be increased to offset the reduced number of coil turns effecting dynamic control without excessive demand on the control current source amplifier.

It will be immediately apparent that the number of supply sources is reduced from one high voltage current source per pole arrangement to one bias current source for the whole bearing arrangement plus one high voltage control source per pair of the pole arrangements. Also, although the control sources nominally produce zero current, they are required to produce current bidirectionally to effect control, such sources may readily be provided from the servo mechanism art, where such devices are used to drive servo motors.

The magnetic bearing arrangement according to the invention may be implemented as a radial bearing, an axial bearing or as a combination of both. Where such bearing is a combined radial and axial bearing, the bias coils of the radial and axial bearings are connected in series and all powered from said bias current source.

In addition to the cost saving associated with individual current sources, the control current sources, which produce only small control currents normally and large currents only exceptionally, are able to run without sophisticated temperature conditioning and therefore more reliably at less cost, both individually and in total.

These and other benefits and advantages will be appreciated from the following description of embodiments of the invention described with reference to the accompanying drawings, in which:
Figure 1(a) is a cross-section through an electromagnetic radial bearing of known form illustrating schematically electromagnet coil means and high voltage electrical supply means therefor as described above,
Figure 1(b) is a sectional elevation through an electromagnetic axial bearing of known form illustrating schematically electromagnet coil means and high voltage electrical supply means therefor, as described above.
Figure 2 is a cross-sectional view, similar to Figure 1(a), through an electromagnetic radial bearing in accordance with the present invention showing schematically novel electromagnet coil means and electrical supply means therefor,
Figure 3 is an elevation view of a rotor in the form of a shaft suspended at opposite ends thereof by electromagnetic radial bearings of the type shown in Figure 2 but including a common bias current source,
Figure 4 is a sectional elevation, similar to Figure 1(b), through an electromagnetic axial bearing according to the present invention showing schematically novel electromagnet coil means and electrical supply means therefor, and
Figure 5 is an elevational view, similar to Figure 3, but showing also an electromagnetic axial bearing associated with a collar on the shaft and the common bias current source for the bias coils of axial and radial bearings.

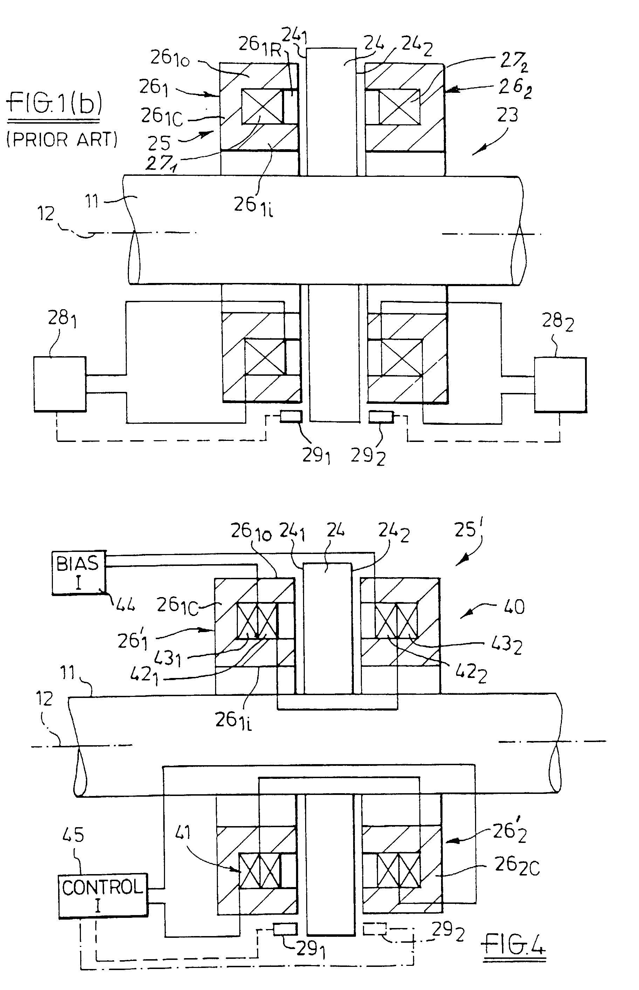

Referring to Figure 2, an electromagnetic radial bearing 30 has a physical structure, except for the coil means and supply means, essentially as described above with reference to Figure 1(a) and corresponding parts are given the same reference numerals.

Whereas in the known arrangement Figure 1(a) the number and disposition of pole arrangements 15₁-15₄ of stator 15 is a matter of choice, in a bearing arrangement according to the present invention the stator 15' has pole arrangements 15'₁-15'₄ which must be in oppositely disposed pairs with respect to any radial axis such as 16 or 17. Each such axis having associated therewith such a pair of pole arrangements comprises a displacement axis.

The electromagnet coil means 31 comprises for each stator pole arrangement of the bearing (of which pole arrangement 15'₁ is exemplary) separate bias coils 31_{1A}-31_{1C}, for providing high and substantially constant levels of bias flux in, and between, the pole arrangement and rotor, and control coils 33_{1A}-33_{1C}, for dynamically varying the total flux level in the pole arrangement and the suspension force applied by the pole arrangement along the particular radial displacement axis, 16.

The bias coils for all of the pole arrangements are connected in series and to a single bias current source 34 arranged to supply a substantially constant bias current to them all at relatively low voltage, of the order of 5 volts. The bias coils are connected to each other such that for each pair of pole arrangements disposed oppositely along a radial displacement axis the coils (such as coils 31_{1A}-31_{1C} and 31_{3A}-31_{3C} on axis 16) are coupled to provide forces on the rotor along the displacement axis in opposite directions.

The control coils of each such pair of pole arrangements, coils 33_{1A}-33_{1C} and 33_{3A}-33_{3C}, for axis 16, are coupled in series to provide, for a particular current direction, magnetic fluxes within the pole arrangements which assist the bias coil flux of one pole arrangement whilst opposing the bias coil flux of the other pole arrangement produce opposing fluxes.

The control coils 33_{1A}-33_{1C} and 33_{3A}-33_{3C} are connected to a control current source 35 and control coils 33_{2A}-33_{2C} and 33_{4A}-33_{4C} are connected to a control current source 36.

Displacement (or other related motion parameter) sensor means 22₁₆ and 22₁₇, associated with the radial displacement axes 16 and 17 respectively, each provides signals directly, or indirectly via a separate controller, to the control current sources 35 and 36 respectively. The control current sources are capable of providing direct current in either directional sense through the associated coils and driving such coils at relatively high voltage, conveniently as derived by rectification of the local mains supply and typically of the order of 300 volts.

Considering operation of the bearing arrangement, for any particular radial axis, the rotor is suspended between the opposed pole arrangements principally by the bias current flowing in the bias coils, which may have a different number of turns from each other if a static external force such as gravity is to be countered. In hypothetically stable conditions, that is, with no disturbance of the rotor registered by the displacement sensor means, no current passes through the control coils. However, in practice, there are always disturbances to be countered and when the rotational axis of the rotor is disturbed along the radial axis, the displacement sensor means causes the control current means to provide a current through the associated control coils in such a directional sense as to generate magnetic fluxes in the cores in directional senses to vary the overall flux levels within the pole arrangements, and thus the forces acting on the rotor, to counter the disturbance, the high voltage control current source permitting a high rate of change of current through the inductive circuit of the control coils.

It will be understood that although in any one pole arrangement of the pair there is inductive coupling between the control and bias coils with the result that the changing control current induces voltage across the bias coils and a current in the bias circuit which may tend to vary the bias current in a sense which nullifies the intended change in magnetic flux, the effect of the coupling between control and bias coils in the opposite pole arrangement induces such a bias circuit current of opposite sense, whereby there is substantially no overall change in bias coil current and only a change in radially directed force by the pair of pole arrangements, being an increase in radial force on the rotor from one pole arrangement and a corresponding decrease in radial force from the other pole arrangement.

It will be appreciated that in normal operation, only minor corrections of radial position are usually required on a continual basis, and the control current source amplifiers, although potentially heat generating, are run conservatively. If in the event of an unusually large radial displacement, such as due to an exceptionally large amplitude external force acting on the rotor or due to a failure in the bias circuit, the control supply means is able to provide relatively large levels of control current for a limited duration of such external event and/or to enable the still-suspended rotor to be slowed to rest or a back-up bias source to be switched into circuit, as described further hereinafter.

In addition to the more conservative rating of the high voltage control current source amplifiers, it will be appreciated that one such amplifier now serves two pole arrangements instead of one only, thus a saving on the number of high voltage control current amplifiers required. Furthermore, although each control current source is required to operate both at high voltage and provide current in opposite directions, that is, bi-directionally, such source is readily implemented by switched mode amplifiers commonly employed with servo motors.

As indicated above, the bias current supply, in not requiring to respond to, or effect, rapid changes in current, may be a simple low voltage design and deliver current to a number of bias coils. If, as is common, such radial bearing arrangements are disposed in pairs spaced apart along the rotational axis of the rotor, such a single bias current source may supply bias current to all of the bias coils.

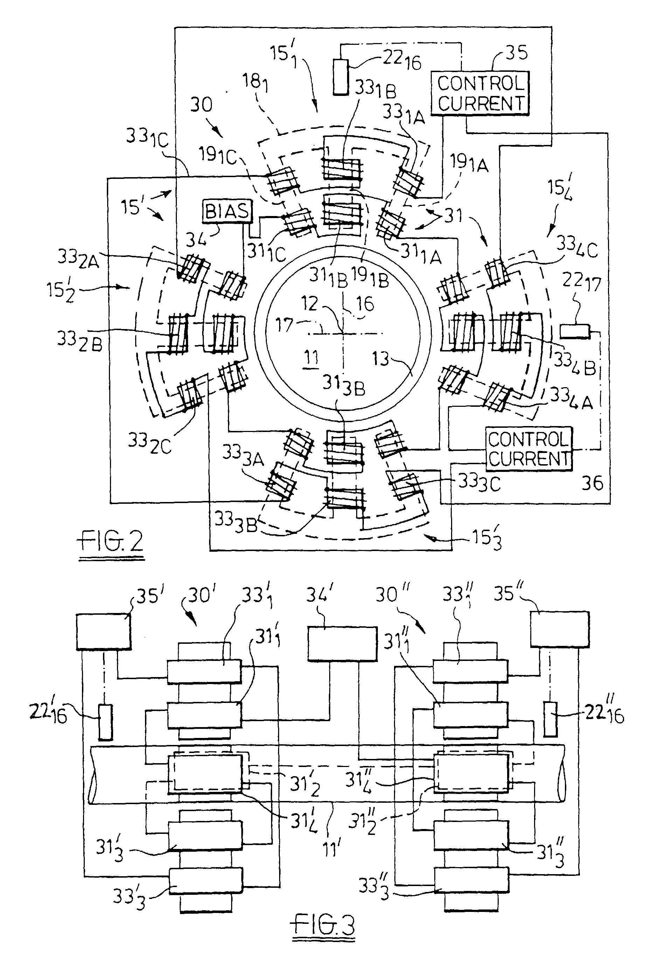

Referring to Figure 3 this shows as an elevational view of a shaft 11' having associated therewith, and spaced apart along its length, component electromagnet radial bearing arrangements 30' and 30", substantially similar to the arrangement 30 of Figure 2 in respectively having the pairs of diametrically oppositely disposed pole arrangements and associated with each pair of pole arrangements a radial displacement sensor such as 22'₁₆ and 22₁₆, control current source such as 35' and 35" and control current coils such as 33'₁, 33'₃ and 33"₁, 33"₃. In this bearing arrangement a single bias current source 34' supplies the bias coils of the component arrangements 30' and 30" which are all connected in series.

It will be understood that although the invention is illustrated with two pairs of oppositely disposed pole arrangements there is no limitation on the number of such pairs. Likewise, although each pole arrangement is shown having three limbs, there is no upper limit on the number of limbs in each pole arrangement, provided the suspension and correction forces act in the sensed radial directions.

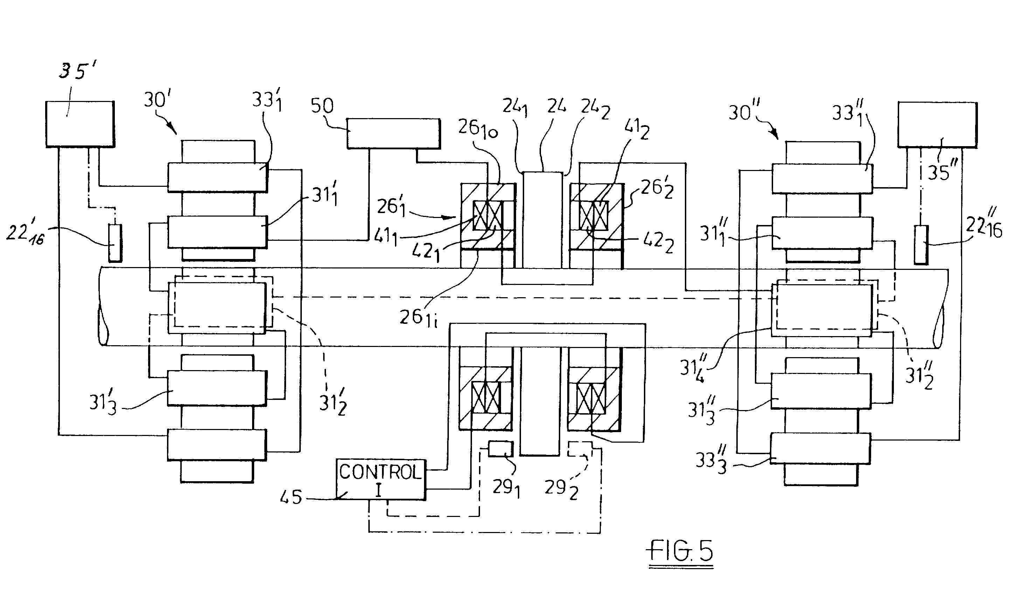

Referring now to Figure 4, an electromagnetic axial bearing 40 has a physical structure, except for the coil means and supply means, essentially as described above with reference to Figure 1(b) and corresponding parts are given the same reference numbers. Whereas in the known arrangement of Figure 1(b) the pole arrangements are totally independent and the stator may comprise only one such pole arrangement if external axial forces dictate, in accordance with the present invention, pole arrangements 26'₁ and 26'₂ of stator 25' must exist in an oppositely disposed and directed pair.

Electromagnet coil means, indicated generally at 41, comprises for each stator pole arrangement (of which pole arrangement 26'₁ is exemplary) separate bias coil 42₁, for providing high and substantially constant levels of bias flux in, and between the pole arrangement and rotor, and control coil 43₁, for dynamically varying the overall flux level in the pole arrangement and thus the suspension force applied by the pole arrangement along the axis 12. which comprises the displacement axis.

As with the radial bearing 30 described above, the bias coils for both of the pole arrangements 26'₁ and 26'₂ are connected in series and a single bias current source 44 arranged to supply a substantially constant bias current to them both at relatively low voltage, of the order of 5 volts.

The bias coils are connected to each other such that the coils 42₁ and 42₂ are coupled to provide forces on the rotor along the displacement axis in opposite directions, and the control coils 43₁ and 43₂ are connected in series to control current source 45 to provide, for a particular current direction, fluxes within the respective pole arrangements which aid and oppose the fluxes produced by the bias coils.

Displacement (or other related motion parameter) sensor means 29₁, possibly 29₂ associated with the rotor axis 12 provides signals directly, or indirectly via a separate controller, to the control current source 45, which is capable of providing direct current in either directional sense through the associated coils and driving such coils at relatively high voltage, conveniently as derived by rectification of the local mains supply and typically of the order of 300 volts.

Operation, in respect of controlling the position of the rotor along an axis extending between the stator pole arrangements, is substantially as described above for the radial bearing along a single axis and requires no further detailed description.

It will be appreciated that although the axial bearing arrangement still requires two current sources, the separation of the bias current and control current sources enables each to be run optimally and thus more reliably.

Furthermore, and as illustrated in Figure 5, such an electromagnetic axial bearing is frequently used in combination with one or more radial bearing arrangements similar to those described for Figure 3. It will be appreciated that in such combinations, a single bias current source 50 may be employed with all bias coils of the arrangement connected in series, and separate control current sources used for different radial axes the longitudinal axis.

Having described the electromagnetic relationships and operation, it will be appreciated from Figures 1(a) and 2 that in many instances the physical disposition of the core and coils of any pole arrangement are constrained by the dimension of the rotating machine of which the bearing is part, that is, the volume available for providing the coils is substantially fixed. Thus in changing from the known arrangement of Figure 1(a), or 1(b), it may be impracticable to vary the gauge of coil wire and the number of turns which can be accommodated in the pole arrangement.

Notwithstanding the separation of bias and control coils within each pole arrangement, the invention may be implemented by having the bias and control coils formed of the same gauge wire and same total number of turns as in the known arrangement, the difference being in that each erstwhile single winding is divided at some point along its length, conveniently near the centre such that the bias and control coils have substantially the same number of turns. The bias current source means may readily be caused to drive a bias coil associated with any pole arrangement, having half the number of turns of the known arrangement at twice the bias current at said lower voltage without generating source temperatures that could comprise reliability. In respect of the serially connected control coils associated with each control coil source, if they exhibit half the number of turns and thus one quarter of the inductance, the control coils of two pole arrangements connected in series without being inductively coupled to each other exhibit half the inductance of the known coil to the control current source and thus permit a greater current slew rate for the same applied voltage, or possibly a similar current slew rate at a reduce supply voltage.

Thus the control current source is able to be even more conservatively rated than in the known arrangement with increased reliability for each such source; and, with fewer such high voltage current sources, increasing the overall reliability of the bearing arrangement. Furthermore, because the bias and dynamic control currents are derived from separate sources, it is readily possible to provide redundancy for any control current source and/or the bias current source.

If failure of the bias current source is detected (by conventional monitoring means not shown), the control current sources may readily provide additional supporting current until a back-up bias current source is switched into circuit and provides sufficient bias current in the coils to assume responsibility for rotor suspension. Similarly, if the bias coils fail, the control current sources may effect suspension of the rotor until it is slowed to rest.

Correspondingly, if failure of any control current source is detected a back-up source may be simply switched into circuit at zero control current without disrupting the bias current which is primarily responsible for keeping the rotor suspended.

It will be appreciated that each control current source may have a back-up source associated therewith, offering complete redundancy, or a single back-up such source may be associated with a plurality of control current sources on the assumption that only one source would fail at any one time and require automatic substitution whilst repairs or replacement is effected.

It will also be appreciated that if space within the pole arrangement permits and/or the current sources are arranged normally to provide greater currents to coils with smaller numbers of turns, redundant bias coils and/or control coils may be wound in the pole arrangements and, if necessary substituted for failed ones without effecting the ability of the bearing to support the rotor.

## Claims

1. An electromagnetic bearing (30;30',30";40) comprising a rotor (11;11;24), rotatable about a rotational axis (12), and stator means (15';25) comprising an even number of stator pole arrangements (15'₁-15'₄;26'₁, 26'₂), having limbs of ferromagnetic material (19_{1A}---;26₁ᵢ,26₁ₒ) directed towards differently facing surfaces (24₁,24₂) of the rotor to form therewith a magnetic flux path through the rotor, disposed in pairs (15₁ 15₃; 15₂ 15₄; 26'₁,26'₂) each pair being oppositely directed along a displacement axis (16, 17;12),
electromagnet coil means (31;31',31";41) associated with said limbs, comprising, for each stator pole arrangement (15'₁;26'₁, 26'₂) separate bias coils (31_{1A}-31_{1C};42₁, 42₂) operable to provide a said bias flux, and control coils (33_{1A} - 33_{1C};43₁, 43₂) operable to dynamically vary the total flux, and thus suspension force applied by the pole arrangement, the bias coils (31_{1A} - 31_{4C}; 42₁, 42₂) for all of the pole arrangements being connected in series, such that the coils of each pair of oppositely disposed pole arrangements are coupled to provide fluxes within the pole arrangements that effect forces on the rotor along the displacement axis in opposite directions and the control coils of each pair of said oppositely disposed pole arrangements being connected in series, to provide, for a particular current direction, fluxes within said pole arrangements that aid and oppose the bias coil fluxes in the respective pole arrangement, and
electrical supply means (34,35,36;35',45'',34';44,45) operable to provide current to the coil means to effect a bias flux within the stator arrangement and attracting the rotor to the pole arrangements,and
control means (35,36;35',35";35,45,45) including sensor means (22₁₆,22₁₇;22'₁₆,22'₁₇;22"₁₆,22"₁₇;29₁,29₂) responsive to displacement of the rotor from a desired position with respect to the stator, a bias current source (34;34';50;44) arranged to supply a substantially constant bias current to the serially connected bias coils, and, for each said pair of oppositely disposed pole arrangements associated with a displacement axis, a common control current source (35, 36;35', 35";45) responsive to an indication from said sensor means of displacement of the rotor along said displacement axis to supply control current to the control coils of the pair in such a sense as to vary the forces along said axis generated by the bias coils to oppose said displacement said control means being operable to vary the current supply to the electromagnetic coil means to vary the flux and restore the rotor to said desired position, characterised in that each control current source (35, 36;35',35";45) comprises a switched-mode, bi-directional current, servo-motor power amplifier arranged to supply control current to the associated control coils (33_{1A} - 33_{4C};33'₁-33"₄ᵢ,43₁, 43₂) at relatively high voltage derivable from local mains supply and the bias current source (34;34';50;44) is arranged to supply said bias current to the bias coils (31_{1A} - 31_{4C};31'₁ - 31"₄;42₁, 42₂) at a voltage low in comparison to that of the control current.

2. An electromagnetic bearing as claimed in claim 1 characterised in that the bias and control coils (31_{1A} - 31_{1C,} 33_{1A} - 33_{1C}; 42₁,43₁) of each pole arrangement (15'₁;26₁)( have substantially the same number of turns.

3. An electromagnetic bearing as claimed in any one of the preceding claims characterised in that the bias and control coils (31_{1A} - 31_{1C}, 33_{1A} - 33_{1C};42₁, 43₁) of each pole arrangement (15'₁;26'₁) are formed of wire of the same gauge.

4. An electromagnetic bearing as claimed in any one of the preceding claims characterised by at least one back-up control current source associated with said pairs of stator pole arrangements and means operable to detect failure of a said control current source associated with a displacement axis to connect said back-up source to the control coils associated with the axis.

5. An electromagnetic bearing arrangement as claimed in any one of claims 1 to4 comprising an axial bearing (40) in which said rotor (24) has a pair of radially extending, axially facing surfaces (24₁, 24₂) and said stator (25') is disposed surrounding the rotational axis and axially spaced from said rotor surfaces, said pole arrangements (26'₁, 26'₂) of the stator pair being arranged to exert forces on said rotor in opposite axial directions (12).

6. An electromagnetic bearing arrangement as claimed in any one of claims 1 to 4 comprising a radial bearing (30;30', 30") in which said rotor has a surface region thereof comprising a stack of annular ferromagnetic laminations (13) each extending about the rotation axis (12) and electrically insulated from each other, and said stator (15') surrounds the rotor having said plurality of stator pole arrangements (15'₁ - 15'₄), arrayed about the rotation axis in said pairs, directed towards said surface region, each stator pole arrangement being centred on a radial pole axis (16,17) and having at least two pole limbs (19_{1A} - 19_{1C}) separated in a circumferential direction and directed towards the said rotation axis to form with said laminated rotor region a flux path extending circumferentially in the rotor.

7. An electromagnetic bearing as claimed in claim 6 characterised by a plurality of radial bearings (30', 30'') separated along the axis of rotation (12) and the bias coils of all the bearings (31'₁ - 31'₄, 31"₁ - 31"₄) are connected in series and supplied with current by said bias current source (34').

8. An electromagnetic bearing arrangement as claimed in claim 6 or claim 7 characterised by in combination therewith an axial bearing as claimed in claim 5 in which the bias coils (42₁, 42₂, 31₁) of the axial and radial bearings are connected in series and supplied with this current by a common bias current source (50).

## Patentansprüche

1. Elektromagnetisches Lager (30; 30' 30"; 40), umfassend einen Rotor (11; 11; 24), welcher um eine Drehachse (12) rotierbar ist, und Statormittel (15'; 25'), umfassend eine gerade Anzahl von Statorpolanordnungen (15'₁ - 15'₄; 26'₁, 26'₂), mit Schenkeln bzw. Teilkreisen aus ferromagnetischem Material (19_{1A}---; 26₁ᵢ, 26₁₀), welche zu unterschiedlich gewandten Oberflächen (24₁, 24₂) des Rotors gerichtet sind, um mit diesem einen magnetischen Flußweg durch den Rotor auszubilden, welche in Paaren (15₁15₃; 15₂15₄; 26'₁,26'₂) angeordnet sind, wobei jedes Paar gegenüberliegend entlang einer Verschiebeachse (16, 17; 12) ausgerichtet ist,
elektromagnetische Spulenmittel (31; 31', 31"; 41), welche den Schenkeln zugeordnet sind, umfassend für jede Statorpolanordnung (15'₁; 26'₁, 26'₂) getrennte Vormagnetisierungsspulen (31_{1A} - 31_{1C}; 42₁, 42₂), welche betreibbar sind, um einen Bias- bzw. Vormagnetisierungsfluß zur Verfügung zu stellen, und Steuer- bzw. Regelspulen (33_{1A} - 33_{1C}; 43₁, 43₂), welche betreibbar sind, um dynamisch den gesamten Fluß und dadurch die durch die Polanordnung aufgebrachte Zug- bzw. Aufhängungskraft zu variieren, wobei die Vormagnetisierungsspulen (31_{1A} - 31_{4C}; 42₁, 42₂) für alle Polanordnungen in Serie verbunden sind, sodaß die Spulen von jedem Paar von gegenüberliegend angeordneten Polanordnungen gekoppelt sind, um Flüsse innerhalb der Polanordnungen zur Verfügung zu stellen, welche Kräfte auf den Rotor entlang der Verschiebeachse in entgegengesetzten Richtungen bewirken, und wobei die Regelspulen von jedem Paar der gegenüberliegend angeordneten Polanordnungen in Serie verbunden sind, um für eine bestimmte Stromrichtung Flüsse innerhalb der Polanordnungen zur Verfügung zu stellen, welche die Vormagnetisierungsspulenflüsse in den entsprechenden Polanordnungen unterstützen und diesen entgegenwirken, und
elektrische Versorgungsmittel (34, 35, 36; 35', 45", 34'; 44, 45), welche betreibbar sind, um einen Strom zu den Spulenmitteln zur Verfügung zu stellen, um einen Vormagnetisierungsfluß innerhalb der Statoranordnung zu bewirken und den Rotor zu den Polanordnungen anzuziehen, und
Steuer- bzw. Regelmittel (35, 36; 35', 35"; 35, 45; 45), beinhaltend Sensormittel (22₁₆, 22₁₇; 22'₁₆, 22'₁₇; 22"₁₆, 22"₁₇; 29₁, 29₂), welche auf eine Verschiebung des Rotors aus einer gewünschten Position relativ zu dem Stator ansprechen, eine vormagnetisierungs-Stromquelle (34, 34'; 50; 44), welche angeordnet ist, um einen im wesentlichen konstanten Vormagnetisierungsstrom den seriell verbundenen Vormagnetisierungsspulen zuzuführen und für jedes Paar der entgegengesetzt angeordneten Polanordnungen, welche einer Verschiebeachse zugeordnet sind, eine gemeinsame Steuer- bzw. Regelstromquelle (35, 36; 35', 35"; 45), welche auf eine Anzeige von den Sensormitteln einer Verschiebung des Rotors entlang der Verschiebeachse anspricht, um einen Steuer- bzw. Regelstrom zu den Steuer- bzw. Regelspulen des Paares in einem derartigen Sinn zuzuführen, um die Kräfte entlang der Achse, welche durch die Vormagnetisierungsspule erzeugt werden, zu variieren, um der Verschiebung der Steuer- bzw. Regelmittel entgegenzuwirken, welche betätigbar sind, um die Stromzufuhr zu den elektromagnetischen Spulenmitteln zu variieren, um den Fluß zu variieren und den Rotor in die gewünschte Position rückzustellen, dadurch gekennzeichnet, daß jede Steuer- bzw. Regelstromquelle (35, 36; 35', 35"; 45) einen umschaltbaren Servomotor-Leistungsverstärker mit Bidirektionalstrom umfaßt, welcher angeordnet ist, um den Steuer- bzw. Regelstrom zu den zugehörigen Steuer- bzw. Regelspulen (33_{1A} - 33_{4C}; 33'₁ - 33"₄; 43₁, 43₂) mit einer relativ hohen Spannung, welche von einer lokalen Netzversorgung ableitbar ist, zuzuführen, und daß die Vormagnetisierungsstromquelle (34; 34'; 50; 44) angeordnet ist, um den Vormagnetisierungsstrom zu den Vormagnetisierungsspulen (31_{1A} - 31_{4C}; 31'₁ - 31"₄, 42₁, 42₂) mit einer im Vergleich zu der Spannung des Regelstromes niedrigen Spannung zuzuführen.

2. Elektromagnetisches Lager nach Anspruch 1, dadurch gekennzeichnet, daß die Vormagnetisierungs- und Steuer- bzw. Regelspulen (31_{1A} - 31_{1C}; 33_{1A} - 33_{1C}; 42₁, 43₁) von jeder Polanordnung (15'₁; 26₁) im wesentlichen dieselbe Anzahl von Wicklungen aufweisen.

3. Elektromagnetisches Lager nach einem der vorangehenden Ansprüche, dadurch gekennzeichnet, daß die Vormagnetisierungs-und Steuer- bzw. Regelspulen (31_{1A} - 31_{1C}; 33_{1A} - 33_{1C}; 42₁, 43₁) von jeder Polanordnung (15'₁; 26'₁) aus einem Draht derselben Abmessung ausgebildet sind.

4. Elektromagnetisches Lager nach einem der vorangehenden Ansprüche, gekennzeichnet durch wenigstens eine Reserveregelstromquelle, welche den Paaren der Statorpolanordnungen zugeordnet ist, und Mitteln, welche betätigbar sind, um einen Fehler der einer Verschiebeachse zugeordneten Steuer- bzw. Regelstromquelle zu detektieren, um die Reservequelle mit den der Achse zugeordneten Regel- bzw. Steuerspulen zu verbinden.

5. Elektromagnetische Lageranordnung nach einem der Ansprüche 1 bis 4, umfassend ein Axiallager (40), in welchem der Rotor (24) ein Paar von sich radial erstreckenden, axial gerichteten Oberflächen (24₁, 24₂) aufweist und wobei der Stator (25') die Rotationsachse umgebend und axial beabstandet von den Rotoroberflächen angeordnet ist, wobei die Polanordnungen (26'₁, 26'₂) des Statorpaars angeordnet sind, um Kräfte auf den Rotor in entgegengesetzten, axialen Richtungen (12) auszuüben.

6. Elektromagnetische Lageranordnung nach einem der Ansprüche 1 bis 4, umfassend ein Radiallager (30; 30', 30"), in welchem der Rotor einen Oberflächenbereich desselben aufweist, welcher einen Stapel von ringförmigen, ferromagnetischen Schichten (13) umfaßt, welche sich jeweils um die Rotationsachse (12) erstrecken und elektrisch voneinander isoliert sind, und wobei der Stator (15') den Rotor umgibt, wobei dieser die Vielzahl von Statorpolanordnungen (15'₁ - 15'₄) aufweist, welche um die Rotationsachse in den Paaren zu dem Oberflächenbereich gerichtet angeordnet sind, wobei jede Statorpolanordnung um eine radiale Polachse (16, 17) zentriert ist und wenigstens zwei Polglieder (19_{1A}- 19_{1C}) aufweist, welche in Umfangsrichtung voneinander getrennt sind und zu der Rotationsachse gerichtet sind, um mit dem aus Schichten ausgebildeten Rotorbereich einen Flußweg auszubilden, welcher sich in Umfangsrichtung in dem Rotor erstreckt.

7. Elektromagnetisches Lager nach Anspruch 6, gekennzeichnet durch eine Vielzahl von Radiallagern (30', 30"), welche entlang der Rotationsachse (12) getrennt sind und wobei die Vormagnetisierungsspulen von allen der Lager (31'₁ - 31'₄; 31"₁ - 31"₄) in Serie miteinander verbunden sind und mit Strom durch die Vormagnetisierungsstromquelle (34') gespeist sind.

8. Elektromagnetische Lageranordnung nach Anspruch 6 oder 7, gekennzeichnet durch eine Kombination mit einem Axiallager nach Anspruch 5, in welchem die Vormagnetisierungsspulen (42₁, 42₂, 31₁) der Axial- und Radiallager in Serie verbunden sind und mit diesem Strom durch eine gemeinsame Vormagnetisierungsstromquelle (50) gespeist sind.

## Revendications

1. Palier électromagnétique (30 ; 30', 30" ; 40) comprenant un rotor (11 ; 11 ; 24), pouvant tourner autour d'un axe de rotation (12), et des moyens formant stator (15' ; 25') comprenant un nombre pair d'agencements formant pôles de stator (15'₁ à 15'₄ ; 26'₁, 26'₂), ayant des branches de matière ferromagnétique (19_{1A} ... ; 26₁ᵢ, 26₁ₒ) dirigées vers des surfaces différemment orientées (24₁, 24₂) du rotor pour former avec ces dernières un chemin de flux magnétique à travers le rotor, disposées en couples (15₁ 15₃ ; 15₂ 15₄ ; 26'₁, 26'₂), chaque couple étant dirigé de façon opposée le long d'un axe de déplacement (16, 17 ; 12),
des moyens formant bobine d'électroaimant (31 ; 31', 31" ; 41) associés auxdites branches, comprenant, pour chaque agencement formant pôle de stator (15'₁ ; 26'₁, 26'₂) des bobines de polarisation distinctes (31_{1A} à 31_{1C} ; 42₁, 42₂) pouvant être mises en oeuvre pour donner un dit flux de polarisation, et des bobines de commande (33_{1A} à 33_{1C} ; 43₁, 43₂) pouvant être mises en oeuvre pour modifier de façon dynamique le flux total, et ainsi la force de suspension appliquée par l'agencement formant pôle, les bobines de polarisation (31_{1A} à 31_{4C} ; 42₁, 42₂) pour tous les agencements formant pôles reliés en série, de sorte que les bobines de chaque couple d'agencements formant pôles disposés de façon opposée sont couplées pour donner des flux à l'intérieur des agencements formant pôles qui affectent les forces sur le rotor le long de l'axe de déplacement dans des sens opposés et les bobines de commande de chaque couple desdits agencements formant pôles disposés de façon opposée étant reliées en série, pour donner, pour un sens de courant particulier, des flux à l'intérieur desdits agencements formant pôles qui aident et opposent les flux de bobines de polarisation dans l'agencement formant pôle respectif, et
des moyens d'alimentation électrique (34, 35, 36 ; 35', 45", 34'; 44, 45) pouvant être mis en oeuvre pour donner du courant aux moyens formant bobine pour affecter un flux de polarisation à l'intérieur de l'agencement formant stator et pour attirer le rotor vers les agencements formant pôles, et
des moyens de commande (35, 36 ; 35', 35" 35, 45 ; 45) comprenant des moyens formant capteur (22₁₆, 22₁₇ ; 22'₁₆, 22'₁₇ ; 22"₁₆, 22"₁₇ ; 29₁, 29₂) sensibles au déplacement du rotor depuis une position souhaitée par rapport au stator, une source de courant de polarisation (34 ; 34' ; 50 ; 44) conçue pour fournir un courant de polarisation sensiblement constant aux bobines de polarisation reliées en série, et, pour chaque dit couple d'agencements formant pôles disposés de façon opposée associés à un axe de déplacement, une source de courant de commande commune (35, 36 ; 35', 35" 45) sensible à une indication en provenance desdits moyens formant capteur de déplacement du rotor le long dudit axe de déplacement pour fournir un courant de commande aux bobines de commande du couple de façon à modifier les forces le long dudit axe produites par les bobines de polarisation pour s'opposer audit déplacement, lesdits moyens de commande pouvant être mis en oeuvre pour modifier l'alimentation en courant vers les moyens formant bobines électromagnétiques pour modifier le flux et pour ramener le rotor vers ladite position souhaitée, caractérisé en ce que chaque source de courant de commande (35, 36 ; 35', 35" ; 45) comprend un amplificateur de puissance à servomoteur, à courant bidirectionnel, à découpage, conçu pour fournir un courant de commande aux bobines de commande associées (33_{1A} à 33_{4C} ; 33'₁ à 33"₄ᵢ ; 43₁, 43₂) à une tension relativement élevée pouvant être obtenue à partir d'une alimentation secteur locale et la source de courant de polarisation (34 ; 34' 50 ; 44) est conçue pour fournir ledit courant de polarisation aux bobines de polarisation (31_{1A} à 31_{4C} ; 31'₁ à 31"₄ ; 42₁, 42₂) à une tension basse en comparaison de celle du courant de commande.

2. Palier électromagnétique selon la revendication 1, caractérisé en ce que les bobines de polarisation et de commande (31_{1A} à 31_{1C}, 33_{1A} à 33_{1C} ; 42₁, 43₁) de chaque agencement formant pôle (15'₁ ; 26₁) ont sensiblement le même nombre de spires.

3. Palier électromagnétique selon l'une quelconque des revendications précédentes, caractérisé en ce que les bobines de polarisation et de commande (31_{1A} à 31_{1C}, 33_{1A} à 33_{1C} ; 42₁, 43₁) de chaque agencement formant pôle (15'₁ ; 26'₁) sont formées avec du fil de même calibre.

4. Palier électromagnétique selon l'une quelconque des revendications précédentes, caractérisé par au moins une source de courant de commande de secours associée auxdits couples d'agencements formant pôles de stator et des moyens pouvant être mis en oeuvre pour détecter une défaillance d'une dite source de courant de commande associée à un axe de déplacement pour relier ladite source de secours aux bobines de commande associées à l'axe.

5. Palier électromagnétique selon l'une quelconque des revendications 1 à 4, comprenant un palier axial (40) dans lequel ledit rotor (24) possède un couple de surfaces se faisant face de façon axiale, s'étendant de façon radiale (24₁, 24₂) et ledit stator (25') est disposé de façon à entourer l'axe de rotation et est espacé de façon axiale desdites surfaces de rotor, lesdits agencements formant pôles (26'₁, 26'₂) du couple de stator étant conçus pour exercer des forces sur ledit rotor dans des sens axiaux opposés (12).

6. Agencement formant palier électromagnétique selon l'une quelconque des revendications 1 à 4, comprenant un palier radial (30 ; 30', 30") dans lequel ledit rotor a une zone de surface de ce dernier comprenant un empilement de stratifiés ferromagnétiques annulaires (13), chacun s'étendant autour de l'axe de rotation (12) et étant électriquement isolé les uns des autres, et ledit stator (15') entoure le rotor ayant ladite pluralité d'agencements formant pôles de stator (15'₁ à 15'₄), groupés autour de l'axe de rotation en dits couples, dirigés vers ladite zone de surface, chaque agencement formant pôle de stator étant centré sur un axe de pôle radial (16, 17) et ayant au moins deux branches de pôle (19_{1A} à 19_{1C}) séparées dans une direction circonférentielle et dirigées vers ledit axe de rotation pour former avec ladite zone de rotor stratifié un chemin de flux s'étendant de façon circonférentielle dans le rotor.

7. Palier électromagnétique selon la revendication 6, caractérisé par une pluralité de paliers radiaux (30', 30") séparés le long de l'axe de rotation (12) et les bobines de polarisation de tous les paliers (31'₁ à 31'₄, 31"₁ à 31"₄) sont reliées en série et alimentées par un courant par ladite source de courant de polarisation (34).

8. Agencement formant palier électromagnétique selon la revendication 6 ou la revendication 7, caractérisé par, associé à ce dernier, un palier axial selon la revendication 5 dans lequel les bobines de polarisation (42₁, 42₂, 31₁) des paliers axiaux et radiaux sont reliées en série et alimentées par ce courant par une source de courant de polarisation commune (50).
